# EUROPEAN PATENT SPECIFICATION

(11) **EP 2 165 098 B1**
(45) Date of publication and mention of the grant of the patent: **04.04.2012**
(21) Application number: 07765791.4
(22) Date of filing: 04.07.2007
(51) Int. Cl.: F16K 11/07

(54) **SHEAR VALVE WITH LAYER MEMBER**
SCHERVENTIL MIT SCHICHTGLIED
VANNE À CISAILLEMENT À ÉLÉMENT STRATIFIÉ

(43) Date of publication of application: 24.03.2010
(73) Proprietor: Agilent Technologies, Inc., Santa Clara CA 95051 (US)
(72) Inventor: BAEUERLE, Martin, 77830 Buehlertal (DE)
(74) Representative: Barth, Daniel Mathias
(86) International application number: PCT/EP2007/056737
(87) International publication number: WO 2009/003521

(56) References cited:
- WO-A-87/04370
- DE-A1- 2 133 624
- FR-A- 2 794 836
- US-A- 3 422 848
- US-A- 5 251 670
- US-A1- 2001 038 071

## Description

### BACKGROUND ART

The present invention relates to a shear valve. In fluidic systems, shear valves are provided for switchable coupling fluidic devices.

US 5,251,670 A discloses a flush valve with the features of the preamble to claim 1. Other shear-type valves are known e.g. from DE 2133624 A1, FR 2794836 A1, US 3,422,848 A, US 2001/0038071 A1, or WO 87/04370 A1.

In a high performance liquid chromatography -HPLC- system, a fluid has to be provided usually at controlled flow rates (e. g. in the range of microliters to milliliters per minute) and at high pressure (e.g. 100 - 2000 bar and even beyond).

The fluid, also being referred to as mobile phase, may be pumped by a high pressure fluid delivery device towards a separation device, also being referred to as stationary phase that comprises a material capable of separating different compounds of a sample being introduced into the mobile phase. Such material, usually so-called beads, which may comprise silica gel, may be filled into a column tube of the separation device that might be coupled to further elements (e.g. a detector and a fractionating collector). For inserting the sample into the system, the fluid drive is decoupled from the stationary phase by means of a shear valve. Due to the high pressure in a HPLC system and high demands with respect to accuracy and repeatability of HPLC measurements, the shear valve is required to have excellent long term sealing characteristics.

### DISCLOSURE

It is an object of the invention to provide an improved shear valve. The object is solved by the independent claims. Further embodiments are shown by the dependent claims.

According to embodiments of the present invention, a shear valve is provided that can provide a switchable fluid connection between a first fluidic device and a second fluidic device. The shear valve comprises a first shear valve
a second shear valve member, and a layer member being positioned between the first shear valve member and the second shear valve member, wherein the layer member or element is arranged to have a fixed spatial relation with respect to the first shear valve member, when moving the first and second shear valve members with respect to each other. The layer member therein comprises a first surface movable abutting to a second surface of the second shear valve member.

In an embodiment, the second surface of the second shear valve member is realized to be hard compared to the first surface of the layer member. The layer member is chosen to be of soft material being flexible, e.g. displaceable and/or compressible, in order to provide a sealing of the valve.

In order to be able to switch fluids at high pressure, e.g. in a range of: 100 - 2000 bar, e.g. at 600 bar, the shear valve members are pressed together under high mechanical force or load. However, high mechanical pressure between the surfaces might lead to wear effects, e.g. abrasion or scratches at the soft surface. Such wear effects might occur especially in the regions opposite to surface structures of the second surface, such as grooves or holes being frequently traversed during shear movements of the valve. One reason therefore is that the soft material of the layer member is partially pressed into such structures due to the high mechanical pressure, if traversing the structures. As the structures might have rather sharp cutting edges due to the hardness of the second surface, the traversing layer material might be damaged in the course of time.

In order to reduce such wear effects, according to embodiments, the structures of the second shear valve member are chosen to have small profile or dip angles with respect to a shear movement. Thereto, a fluid path of the second shear valve member coupling with one or a plurality of is provided having a tapered end section, wherein the depth and/or the width of the path might continuously decrease from an inner point to a free end of the fluid path. Therewith, the dip angle can be kept small, e.g. below 45 degree, below 25 degree, or even below 10 degree, so that a cutting edge effect of the fluid path is kept small compared to greater angles, e.g. dip angles at 90 degree.

In a further embodiment, both shear surfaces are provided being hard with respect to scratches and abrasions, wherein at least one of the surfaces is deformable in response to shear valve movements. In order to provide a mechanically back-up to the deformable first surface, a first layer of a soft (first) material with respect to the surface materials is being positioned behind the first surface. Therein, the first layer is at least partially displaceable and/or compressible, in response to mechanical load variations at (certain parts of) the first surface that occur while moving the first and second surfaces with respect to each other. Displaceable shall mean that a pressure applied to a certain part of a material results in an indentation or impression, wherein parts of the material might "flow" into an adjacent region of the certain part, and compressible shall mean that a pressure applied to the certain part of the material results in an impression reducing the volume of the material at the certain part.

Hardness commonly refers to a material's ability to penetrate softer materials. An object made of a hard material will scratch an object made of a softer material. Scratch hardness of mineral material is often specified according to the so-called Mohs scale of mineral hardness. The Mohs scale usually covers a range from 1 (for Talc) to 10 (for diamond). Preferably the material of the first surface has a hardness of at least 7, preferably 8 or 9 on the Mohs scale.

Hardness of plastic material might be specified according to the so-called Shore scale (shore-D scale for harder plastics). By way of example, the material of the first layer shows a hardness between 50 and 100, preferably between 85 and 95, e.g. of 90 according to the Shore-D scale.

Providing two surfaces of hard material allows for applying a high mechanical force to press both members together, As the first surface allows deformations due to the soft back-up first layer, a sealing of the valve is ensured even if a fluid is applied to the valve ports under high pressure as used in liquid chromatography. Providing both surfaces with hard material results in a significantly reduced friction resistance of shear movements compared to a friction resistance between a hard surface and a soft surface as often used in valves. Furthermore, a wear of the shear valve members is significantly reduced; in particular, as the surfaces of the first layer are not involved into the shear movements, this layer is not affected by wear.

In an embodiment, a layer element is provided comprising the first layer as described above and a second layer joined together in a way that the first layer mechanically backs-up the second layer in response to pressure variations, so that an impression of the first layer due to mechanical load or mechanical load variations applied to the first surface is absorbed by the second layer. Thereto, the material of the second layer is chosen to be hard compared to the material of the second layer.

Preferably the second layer substantially is neither compressible, nor displaceable. Nevertheless, the second layer is provided to respond to pressure or pressure variations applied to the first surface being bended or deflected. Therein the second layer changes its form such that a thickness of the layer remains substantially unchanged over the whole cross section; in other words, an impression applied to the first surface will cause a filet indentation or salient at the opposite surface of the second layer. Differently, the first layer is deformable in a way that an impression applied to one of its surfaces causes at least a compression and/or displacement in a way that a thickness of this layer reduced over at least a part of the whole cross section.

In an embodiment the thickness of the first layer might be in a range between 10 micrometer and 300 micrometer, e.g. 100 micrometer. The thickness of the second layer might be in a range between 5 micrometer and 200 micrometer, e.g. 50 micrometer.

In an embodiment, a first material of the first layer might comprise a polymer material, wherein the polymer material preferably comprises polyimide or PEEK. A polymer thereby is regarded as a substance composed of molecules with large molecular mass composed of repeating structural units.

In an embodiment, a second material of the second layer might be made of metal, e.g. of spring steel or of a metal like material. In an embodiment, the layer surface forming the first surface is hardened or coated with a hard substance, e.g. being coated with diamond like carbon -DLC-, diamond films, other CVD or PVD generated films. The second layer therein might be realized as surface hardened spring steel or as DLC coated steel plate.

In an embodiment, the second layer might be realized directly as coating to the first layer, e.g. vulcanized, molded or plasma polymer films.

In an embodiment, the layer element is removably attached to the first shear valve member e.g. by means of a driver pin and a driver pin hole. Therein, the layer element might comprise one or a plurality of pin holes and the first shear valve member might comprise corresponding pins matching to the pin holes. This allows for easily exchanging a worn layer member by a replacement layer member, e.g. during maintenance.

Alternatively, the layer element is arranged being an integrated part of the first shear valve member.

In an embodiment, the first shear valve member comprises a first port and a second port, and the second shear valve member comprises a first fluid path adapted to provide a switchable fluid coupling between the first port and the second port by moving the first and second shear valve members with respect to each other into a certain position. The layer member comprises one or a plurality of ports coupling the ports of the first shear valve member with the first fluid path of the second shear valve member.

In an embodiment, the layer member comprises a microstructure for realizing an additional flow path, e.g. a flow restriction. In an embodiment, such microstructure might form a valve internal cavity e.g. allowing a fixed loop injection to meter a defined volume of sample by use of filling a cavity of defined size.

In an embodiment, the microstructure is realized as a groove and/or hole within the first and/or second layer of the layer element.

In an embodiment the first shear valve member and the layer element are rotatably movable with respect to the second shear valve member, wherein a fluid connection between the first port and the second port is established by rotating the first shear valve member together with the layer element with respect to the second shear valve member into a position, wherein both ports interface with the fluid path, and released by rotating the first shear valve member into a position, wherein at least one of the ports does not interface with the fluid path.

In an embodiment, the shear valve is part of a high performance liquid chromatography system, comprising a separating device comprising a stationary phase for separating compounds of a sample fluid comprised in a mobile phase, and a fluid delivery device adapted for driving a mobile phase through the separating device, wherein the shear valve is coupled between the fluid drive and the separating device for providing a switchable fluid connection between the fluid drive and the separating device.

Embodiments of the invention can be partly or entirely embodied or supported by one or more suitable software programs, which can be stored on or otherwise provided by any kind of data carrier, and which might be executed in or by any suitable data processing unit.

### DETAILED DESCRIPTION

Other objects and many of the attendant advantages of embodiments of the present invention will be readily appreciated and become better understood by reference to the following more detailed description of embodiments in connection with the accompanied drawings. Features that are substantially or functionally equal or similar will be referred to by the same reference signs.

Fig.1 schematically shows a shear valve with a first shear valve member, a second shear valve member and a layer member positioned between the first and second shear valve members,

Fig.2 shows an longitudinal section through the shear valve showing an exemplary schematic layer structure of the shear valve,

Fig.3 shows an exemplary profile of a fluid path of the second shear valve member, and

Fig.4 shows a block diagram of a liquid separation system.

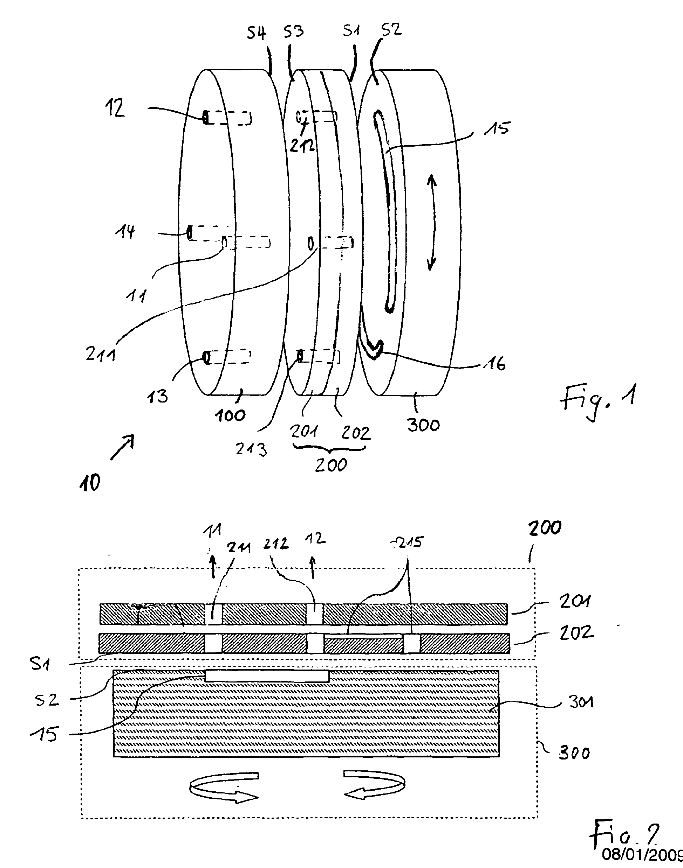

Turning to Fig.1, a schematic diagram of members of a shear valve 10 are shown comprising a first shear valve member 100, a layer member 200, and a second shear valve member 300, each being depicted as separated circular disks. A first surface S1 of the layer member 200 is adjacent to a second surface of the second shear valve member 300. Further, a third surface at the opposite side of the layer member 200 is adjacent to a fourth surface of the first shear valve member 100. The layer member 200 and the first shear valve member 100 are arranged having a fixed spatial relation to each other, so that the third surface and the fourth surface are fixedly abutting to each other. Differently, the second shear valve member 300 is arranged to be rotatably movable around a common center axis of the shear valve members, so that the first surface S1 and the second surface are movable abutting to each other.

The second shear valve member 300 or rotor can pivot around a center axis being perpendicular to all the surfaces. The shear vale comprises by way of example 4 ports and two switchable paths that fluidly couple certain ports depending on a rotation position of the rotor member 300 in relation to the first shear valve members or stator member 100. The stator member 100 comprises a first port 11, a second port 12, a third port 13, and a fourth port 14. The ports 11-14 comprises through holes having openings that are arranged circularly, e.g. at equal angular distance of 90 degree, at the third surface of the stator member 100. The rotor member 300 comprises a first switchable fluid path and a second switchable fluid path that are implemented as first groove 15 and second groove 16 respectively within the second surface of the second shear valve member 300. The layer member 200 comprises channels or layer through holes 211-214 that are similarly arranged compared to ports 11-14, so that each of the through holes 11-14 of the stator member fluidicly couple with a corresponding layer through hole 211-214.

Turning now to Fig.2, an exemplary layer structure of the shear valve 10 is shown in more details. The layer member comprising the first and second layer 201 and 202 can be realized being removably attached to the stator member e.g. by means of a pin hole and a corresponding pin driver, or forming an integral part of the stator member.

Fig.2 further shows the rotor member 300 comprising a rotor head 301. The first fluid path 15 is shown being realized as a groove within the second surface S2.

Exemplarily, two channels 211 and212 being realized as through holes within the first and second layer 201 and 202 are shown having a position, wherein both channels couple with the first fluid path 15, so that the first port 11 and the second port 12 are fluidly connected. Further, microstructures 215 might be comprised that are by way of example coupled to the second channel 212. Such microstructures might be realized as grooves within any of the surface of the first and/or second layer 201 and 202 for realizing additional flow path, e.g. fluid restrictions. Another approach of such microfluidic structure is to have one or a plurality of valve internal cavities e.g. for realizing a fixed sample loop injection.

In order to be able to switch fluids a high pressure, e.g. in a range of: 100 - 2000 bar, e.g. at 600 bar, the shear valve members are pressed together under high mechanical force or load. However, high mechanical pressure between the surfaces might lead to wear effects, e.g. abrasion or scratches, of the first surface, especially in the regions opposite to surface structures of the second surface, such as grooves or holes.

Thereto, in an embodiment, the movably abutting surfaces S1 and S2 are both chosen to be hard. In order to ensure a safe sealing, at least one of the surfaces is deformable in response to shear valve movements. Thereto, the first layer 201 and a second layer 202 are joined together, so that that the first layer 201 mechanically backs-up an deformation or deflection of the second layer 202 caused by mechanical pressure variations originated from a valve movement.

In an embodiment, the rotor or at least the rotor head 301 is made of hard material, e.g. ceramic, hardened steel or other hard-coated material. The first layer is chosen to be soft compared to rotor head. In an embodiment, the first layer 201 is made of plastic material, e.g. of a polymer (polymer film) such as polyimide or PEEK. The second layer 202 is made of hard material preferably chosen to be rather thin, e.g. 50 micrometer thus providing a high flexibility, in order to provide an elastic (spring loaded) sealing; in other words, the second layer is flexible in a way, that it allows elastically varying its shape under mechanical forces, neither changing the volume, nor a width of the layer. The second layer 202 might be realized as surface hardened spring steel or as DLC coated steel plate.

The above-described embodiment allows for applying high mechanical forces to the shear valve members in order to provide a high mechanical pressure between both surfaces S1 and S2, thereby significantly reducing a friction resistance between the first and second surface compared to a mechanical coupling between a hard surface and a soft surface. Further, a wear of shear valve members is significantly reduced, as the shear surfaces are highly resistant against abrasion or scratches. The necessary flexibility is provided by the soft first layer wherein the surfaces of this layer are not involved in the shear movement and thus does not show significant wear effects.

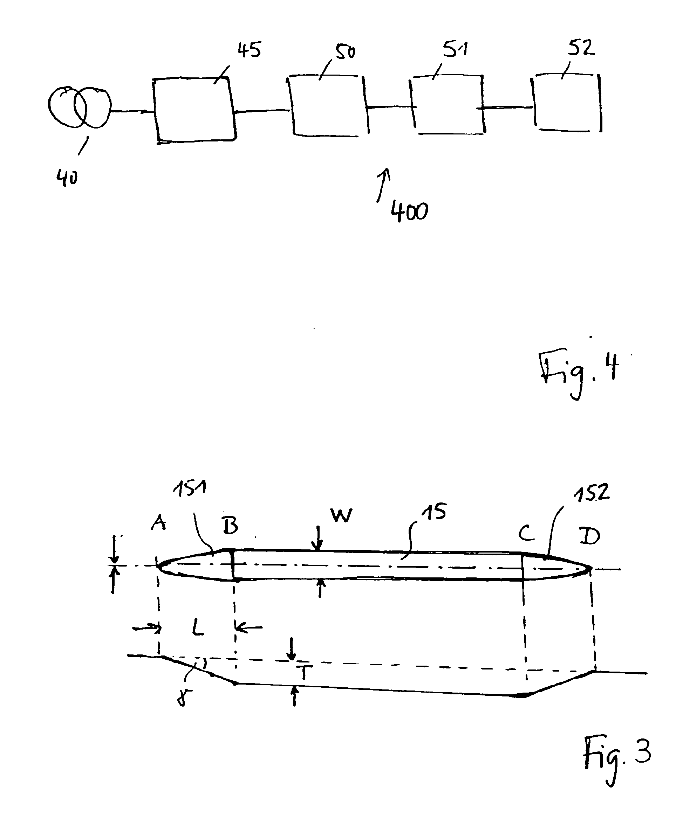

Fig. 3 shows an example for a profile of the first fluid path that is formed such that it smoothly interacts with the layer member. Fig. 3 thereto shows an exemplary depth profile of the first fluid path 15. The first fluid path 15 comprises by way of example two end sections 151 and 152 each being tapered towards its free ends, and a middle section which might have a constant cross profile between the two end sections 151 and 152 by way of example realized as half-circle groove within the second surface S2. The end sections 151 and 152 show each a cone-like form tapering towards the free end points of the first fluid path 15.

Between the first free end point A and first inner end point B, the depth increases up a maximum depth T. By way of example, the both the depth and the width increase substantially linearly between the first free end point A and the first inner point B, and decrease between the second inner point C and the second free end point D respectively. Between the first inner end point B and the second inner end point C, the depth and the width remain constant at the maximum depth T and maximum width W.

The maximum depth D might be in the range between 0.02 mm and 1 mm, e.g. 0.2 mm. The maximum width W might be in the range between 0.02 mm and 1 mm, e.g. 0.4 mm. The total length of the groove might be in the range of 1 mm and 20 mm, e.g. 8 mm, whereof the length L of the end sections is by way of example 1 mm.

According to the example of Fig.3, the fluid path 15 shows a profile angle with respect to the surfaces S1 and S2 that depends on the length L and the depth T of the tapered section. With an increasing length L, the dip angle decreases. Preferably the profile angle γ is chosen to be significantly smaller than 90 degree, e.g. 10 degree or even below 10 degree. Providing a small profile angle γ has the advantage that damages to the surface material originating from shear movements at high pressure between the moving surfaces can be significantly reduced.

Fig.4 shows an exemplary block diagram of a liquid separation system 400. A pump 40 drives a mobile phase via a sample introduction device 45 towards a separating device 50 (such as a chromatographic column) comprising a stationary phase. The sample introduction device 45 might comprise a sample loop and a fluid switch arrangement comprising the shear valve 10 as described above, for switchably de-coupling the sample loop from the fluid path between the pump 40 and the separating device 50 and drawing a sample fluid into the sample loop, and coupling the sample loop into the fluid path for driving the inserted sample fluid through the separation device 50. The stationary phase of the separating device 50 is adapted for separating compounds of the sample fluid. A detector 51 is provided for detecting separated compounds of the sample fluid. A fraction collector can be provided for collecting separated compounds of the sample fluid.

Further details of such liquid separation system 400 are disclosed with respect to the Agilent 1200 Series Rapid Resolution LC system or the Agilent 1100 HPLC series, both provided by the applicant Agilent Technologies, under www.agilent.com.

## Claims

1. A shear valve (10), comprising:
a first shear valve member (100),
a second shear valve member (300), and
a layer member (200) being positioned between the first shear valve member (100) and the second shear valve member (300), wherein the layer member (200) is arranged to have a fixed spatial relation with respect to the first shear valve member (100), when moving the first and second shear valve members (100, 300) with respect to each other,
wherein the layer member (200) comprises a first surface (S1), and the second shear valve member (300) comprises a second surface (S2), wherein the first surface (S1) and the second surface (S2) are arranged movably abutting to each other,
**characterized in that** the layer member (200) comprises a first layer (201) adapted to absorb a deformation of the first surface (S1) caused from moving the first and second shear valve members (100, 300) with respect to each other.

2. The shear valve (10) of the preceding claim, wherein the first layer is positioned between the first surface (S1) and a third interface of (S3) of the layer member (200) fixedly abutting to a fourth interface (S4) of the first shear valve member (100).

3. The shear valve (10) of claim 1 or 2, wherein the first layer (201) comprises a first material being one of: displaceable, compressible, and displaceable and compressible, in response to the deformation of the first surface (S1).

4. The shear valve (10) of the preceding claim, wherein the first material comprises a plastic material, preferably a polymer material, more preferably comprising a polyimide material or a PEEK material.

5. The shear valve (10) of any one of the above claims, wherein the first surface (S1) and the second surface (S2) comprises each a hard material having a high resistance, to scratching or abrasion, e.g. of a hardness of at least 7 according to the Mohs scale, compared to the first material of the first layer (201), e.g. of a hardness of 90 according to the Shore-D scale.

6. The shear valve (10) of any one of the above claims, wherein at least one of the first surface (S1) and the second surface (S2) comprises one of: ceramics, diamond-like carbon, a diamond film, stainless steel.

7. The shear valve (10) of any one of the above claims, wherein the layer member (200) comprises a second layer (202), wherein one of the surfaces of the second layer forms the first surface (S1) and an opposite surface of the second layer is attached to the first layer (201).

8. The shear valve (10) of any one of the above claims, wherein the layer member (200) is removably attached to the first shear valve member (100), preferably by means of a driver pin and a driver pin hole.

9. The shear valve (10) of any one of the above claims, wherein the first shear valve member (100) comprises a first port (11) and a second port, the layer member comprises a first channel (211) and a second channel (212) each interfacing with the first port (11) and the second port (12) respectively, and the second shear valve member (300) comprises a fluid path (15) adapted for switchably coupling the first port (11) and the second port (12) via the first channel and the second channel respectively, by moving the first and second shear valve members (100, 300) with respect to each other into a corresponding position.

10. The shear valve (10) of any one of the above claims, wherein the first shear valve member (100) is rotatably movable with respect to the second shear valve member (300).

11. A high performance liquid chromatography system (350), comprising:
the shear valve (10) of any one of the above claims,
a separating device (50) comprising a stationary phase for separating compounds of a sample fluid comprised in a mobile phase, and
a pump (40) adapted for driving a mobile phase through the separating device,
wherein the shear valve (10) is coupled between the fluid drive (40) and the separating device (50) for providing a switchable fluid connection between the pump (40) and the separating device (50).

## Patentansprüche

1. Ein Scherventil (10) aufweisend:
ein erstes Scherventilelement (100),
ein zweites Scherventilelement (300) und
ein Schichtelement (200), welches zwischen dem ersten Scherventilelement (100) und dem zweiten Scherventilelement (300) positioniert ist, wobei das Schichtelement (200) angeordnet ist, eine feste räumliche Beziehung in Bezug zu dem ersten Scherventilelement (100) zu haben, wenn das erste und zweite Scherventilelement (100, 300) bezüglich einander bewegt werden,
wobei das Schichtelement (200) eine erste Oberfläche (S1) aufweist und das zweite Scherventilelement (300) eine zweite Oberfläche (S2) aufweist, wobei die erste Oberfläche (S1) und die zweite Oberfläche (S2) beweglich aneinander anliegend eingerichtet sind,
**dadurch gekennzeichnet, dass** das Schichtelement (200) eine erste Schicht (201) aufweist, welche geeignet ist eine Deformation der ersten Oberfläche (S1) zu absorbieren, welche Deformation von einem Bewegen des ersten und zweiten Scherventilelements (100, 300) bezüglich einander verursacht wird.

2. Das Scherventil (10) gemäß dem vorangehenden Anspruch,
wobei die erste Schicht zwischen der ersten Oberfläche (S1) und einer dritten Grenzschicht (S3) des Schichtelements (200) positioniert ist, welche fest an einer vierten Grenzschicht (S4) des ersten Scherventilelements (100) anliegt.

3. Das Scherventil (10) gemäß Anspruch 1 oder 2,
wobei die erste Schicht (201) ein erstes Material aufweist, welches eines ist von: verlagerbar, kompressibel und verlagerbar und kompressibel, in Antwort auf eine Deformation der ersten Oberfläche (S1).

4. Das Scherventil (10) gemäß dem vorangehenden Anspruch,
wobei das erste Material ein Plastikmaterial aufweist, bevorzugt ein Polymermaterial, besonders bevorzugt ein Polyimidmaterial oder ein PEEK Material aufweisend.

5. Das Scherventil (10) gemäß irgendeinem der obigen Ansprüche,
wobei die erste Oberfläche (S1) und die zweite Oberfläche (S2) jeweils ein hartes Material aufweisen, welches eine hohe Beständigkeit gegen Kratzen oder Abschürfung hat, z.B. von einer Härte von zumindest 7 gemäß der Mohs Skala, im Vergleich zu dem ersten Material der ersten Schicht (201), z.B. von einer Härte von 90 gemäß der Shore-D Skala.

6. Das Scherventil (10) gemäß irgendeinem der obigen Ansprüche,
wobei zumindest eine von der ersten Oberfläche (S1) und der zweiten Oberfläche (S2) eines aufweist von: Keramik, diamant-ähnliches Karbon, Diamantfilm, rostfreier Stahl.

7. Das Scherventil (10) gemäß irgendeinem der obigen Ansprüche,
wobei das Schichtelement (200) eine zweite Schicht (202) aufweist, wobei eine der Oberflächen der zweiten Schicht die erste Oberfläche (S1) bildet und eine gegenüberliegende Oberfläche der zweiten Schicht an der ersten Schicht (201) befestigt ist.

8. Das Scherventil (10) gemäß irgendeinem der obigen Ansprüche,
wobei das Schichtelement (200) entfernbar an dem ersten Scherventilelement (100) befestigt ist, bevorzugt mittels eines Mitnehmerstifts und einer Mitnehmerstiftsbohrung.

9. Das Scherventil (10) gemäß irgendeinem der obigen Ansprüche,
wobei das erste Scherventilelement (100) einen ersten Anschluss (11) und einen zweiten Anschluss aufweist, das Schichtelement einen ersten Kanal (211) und einen zweiten Kanal (212) aufweist, wobei jeder mit dem ersten Anschluss (11) beziehungsweise dem zweiten Anschluss (12) verbunden ist, und das zweite Scherventilelement (300) einen Fluidpfad (15) aufweist, welcher angepasst ist für ein schaltbares Koppeln des ersten Anschlusses (11) und des zweiten Anschlusses (12) über den ersten Kanal beziehungsweise den zweiten Kanal mittels Bewegens des ersten und zweiten Scherventilelements (100, 300) bezüglich einander, in eine entsprechende Position.

10. Das Scherventil (10) gemäß irgendeinem der obigen Ansprüche,
wobei das erste Scherventilelement (100) drehbar bewegbar bezüglich des zweiten Scherventilelements (300) ist.

11. Ein Hochleistungsflüssigkeitschromatographiesystem (350) aufweisend:
das Scherventil (10) gemäß irgendeinem der obigen Ansprüche,
ein Separiergerät (50), welches eine stationäre Phase zum Separieren von Stoffen eines Probenfluids, welche in einer beweglichen Phase enthalten sind, aufweist, und
eine Pumpe (40), welche angepasst zum Antreiben einer beweglichen Phase durch das Separiergerät hindurch ist,
wobei das Scherventil (10) zwischen den Fluidantrieb (40) und das Separiergerät (50) gekoppelt ist, um eine schaltbare Fluidverbindung zwischen der Pumpe (40) und dem Separiergerät (50) bereitzustellen.

## Revendications

1. Vanne à guillotine (10), comprenant :
un premier élément de vanne à guillotine (100),
un second élément de vanne à guillotine (300), et
un élément de couche (200) positionné entre le premier élément de vanne à guillotine (100) et le second élément de vanne à guillotine (300), dans laquelle l'élément de couche (200) est agencé pour posséder une relation spatiale fixe par rapport au premier élément de vanne à guillotine (100), lors du déplacement des premier et second éléments de vanne à guillotine (100, 300) l'un par rapport à l'autre,
dans laquelle l'élément de couche (200) comprend une première surface (S1), et le second élément de vanne à guillotine (300) comprend une seconde surface (S2), dans laquelle la première surface (S1) et la seconde surface (S2) sont agencées de façon contiguë et mobile l'une par rapport à l'autre,
**caractérisée en ce que** l'élément de couche (200) comprend une première couche (201) adaptée pour absorber une déformation de la première surface (S1) entraînée par le déplacement des premier et second éléments de vanne à guillotine (100, 300) l'un par rapport à l'autre.

2. Vanne à guillotine (10) selon la revendication précédente, dans laquelle la première couche est positionnée entre la première surface (S1) et une troisième interface (S3) de l'élément de couche (200) contiguë de façon fixe à une quatrième interface (S4) du premier élément de vanne à guillotine (100).

3. Vanne à guillotine (10) selon la revendication 1 ou 2, dans laquelle la première couche (201) comprend un premier matériau déplaçable, ou compressible, ou déplaçable et compressible, en réponse à la déformation de la première surface (S1).

4. Vanne à guillotine (10) selon la revendication précédente, dans laquelle le premier matériau comprend un matériau plastique, de préférence un matériau polymère, mieux encore comprenant un matériau polyimide ou un matériau PEEK.

5. Vanne à guillotine (10) selon une quelconque des revendications précédentes, dans laquelle la première surface (S1) et la seconde surface (S2) comprennent chacune un matériau dur possédant une haute résistance, au rayage ou à l'abrasion, par exemple d'une dureté d'au moins 7 selon l'échelle Mohs, par rapport au premier matériau de la première couche (201), par exemple d'une dureté de 90 selon l'échelle Shore-D.

6. Vanne à guillotine (10) selon une quelconque des revendications précédentes, dans laquelle au moins une parmi la première surface (S1) et la seconde surface (S2) comprend un matériau parmi : de la céramique, du carbone sous forme de diamant amorphe, un film de diamant, de l'acier inoxydable.

7. Vanne à guillotine (10) selon une quelconque des revendications précédentes, dans laquelle l'élément de couche (200) comprend une seconde couche (202), dans laquelle une des surfaces de la seconde couche forme la première surface (S1) et une surface opposée de la seconde couche est fixée à la première couche (201).

8. Vanne à guillotine (10) selon une quelconque des revendications précédentes, dans laquelle l'élément de couche (200) est fixé de façon amovible au premier élément de vanne à guillotine (100), de préférence au moyen d'une goupille d'entraînement et d'un trou à goupille d'entraînement.

9. Vanne à guillotine (10) selon une quelconque des revendications précédentes, dans laquelle le premier élément de vanne à guillotine (100) comprend un premier orifice (11) et un second orifice, l'élément de couche comprend un premier canal (211) et un second canal (212) réalisant chacun une interface avec le premier orifice (11) et le second orifice (12) respectivement, et le second élément de vanne à guillotine (300) comprend un trajet de fluide (15) adapté pour accoupler de façon commutable le premier orifice (11) et le second orifice (12) par l'intermédiaire du premier canal et du second canal respectivement, en déplaçant les premier et second éléments de vanne à guillotine (100, 300) l'un par rapport à l'autre dans une position correspondante.

10. Vanne à guillotine (10) selon une quelconque des revendications précédentes, dans laquelle le premier élément de vanne à guillotine (100) est mobile de façon rotative par rapport au second élément de vanne à guillotine (300).

11. Système de chromatographie liquide à haute performance (350), comprenant :
la vanne à guillotine (10) selon une quelconque des revendications précédentes,
un dispositif séparateur (50) comprenant une phase stationnaire pour séparer des composés d'un fluide échantillon compris dans une phase mobile, et
une pompe (40) adaptée pour entraîner une phase mobile à travers le dispositif séparateur,
dans lequel la vanne à guillotine (10) est accouplée entre l'entraînement de fluide (40) et le dispositif séparateur (50) pour fournir un raccord fluidique commutable entre la pompe (40) et le dispositif séparateur (50).
